# EUROPEAN PATENT SPECIFICATION

(11) **EP 1 220 607 B1**
(45) Date of publication and mention of the grant of the patent: **18.05.2005**
(21) Application number: 00966143.0
(22) Date of filing: 06.10.2000
(51) Int. Cl.: A01N 25/18, A01N 25/10

(54) **BIODEGRADABLE PHEROMONE DISPENSING DEVICES**
BIOLOGISCH ABBAUBARE PHEROMONFREISETZENDE VORRICHTUNGEN
DISPOSITIF BIODEGRADABLE DOTE D'UN POUVOIR D'ATTRACTION

(30) Priority: 12.10.1999 IT MI992121
(43) Date of publication of application: 10.07.2002
(73) Proprietor: ISAGRO S.p.A., 20153 Milano (IT)
(72) Inventor: RAMA, Franco, I-21052 Busto Arsizio-Varese (IT); REGGIORI, Franca, I-28100 Novara (IT); DAL PANE, Massimo, I-48018 Faenza-Ravenna (IT); CONFALONIERI, Giovanni, I-20052 Monza-Milan (IT)
(74) Representative: De Gregori, Antonella
(86) International application number: PCT/EP2000/009908
(87) International publication number: WO 2001/026462

(56) References cited:
- EP-A- 0 402 826
- EP-A- 0 816 430
- WO-A-97/31528
- DE-U- 29 905 603
- US-A- 4 842 860
- DATABASE CHEMABS [Online] CHEMICAL ABSTRACTS SERVICE, COLUMBUS, OHIO, US; A.K.KULSHRESHTHA ET AL.: "Eco-friendly plastics for a niche market" retrieved from STN-INTERNATIONAL, accession no. 130:210446 XP002159780 & POP.PLAST.PACKAG., vol. 43, no. 11, 1998, pages 53-62,
- DATABASE WPI Section Ch, Week 199240 Derwent Publications Ltd., London, GB; Class A97, AN 1992-326741 XP002159782 & JP 04 230602 A (SHINETSU CHEM IND CO LTD), 19 August 1992 (1992-08-19)
- DATABASE CHEMABS [Online] CHEMICAL ABSTRACTS SERVICE, COLUMBUS, OHIO, US; C.BASTIOLI: "Properties and applications of Mater-Bi starch-based materials" retrieved from STN-INTERNATIONAL, accession no. 129:41632 CA XP002159781 & POLYM.DGRAD.STAB., vol. 59, no. 1-3, 1998, pages 263-272,

## Description

The present invention relates to a biodegradable device with a slow release of volatile products which attract insects.

More specifically, the present invention relates to a biodegradable device which supplies pheromones for attracting male insects.

Pheromones have become of great importance in research for new methods for controlling insect species which are harmful to agrarian crops; compared with conventional products, these substances have the advantage of a high selectivity towards a particular species or a limited number of similar species, without influencing non-harmful or useful fauna.

It is therefore possible to fight a certain parasite with the help of pheromones without disturbing the ecological equilibrium.

For example, sexual synthesis pheromones are used both for supervising the population development of parasites and also for directly controlling harmful species preventing their mating.

The first type of application (monitoring) allows the population fluctuations of parasites to be followed, by periodically checking their capture in specific traps, observing their biological cycle to enable the possible approach of the "damage threshold" to be predicted and deciding when to intervene, also with conventional fighting systems.

In the second type of application, the sexual pheromones can either partially or totally substitute insecticides and directly control the harmful species by interfering with their reproduction activity.

There are three techniques used for this latter purpose: "mass capture", "confusion" and "disorientation".

The first consists in attracting and subsequently capturing as many adult insects as possible by means of specific traps using pheromone as bait.

The second technique is effected by saturating the environment with large quantities of active ingredient (not less than 75-100 g/a.i./ha), in order to shield the natural call of the females and thus preventing the males from identifying them.

The third technique consists in creating traces of pheromones predominant over the natural call of the female insects, by the distribution of a sufficiently high number of diffusers with a reduced quantity of active ingredient.

The male insects are therefore busy following false pheromone traces and spend most of their time visiting the various supply points instead of the females present in the area to be protected.

The latter method consequently allows low dosages of pheromone to be used, contrary to those required by the sexual "confusion" method.

In both the confusion and disorientation techniques, the male insect is not only unable to recognize the natural call of the females but cannot even follow the artificial call emitted from the monitoring traps installed inside the lot of land treated. This allows easy control of the effectiveness and persistency of the treatment: in fact, in the presence of confusion or disorientation, captures in the traps must be annulled.

In the confusion technique diffusers are used, whose active ingredient is incorporated in different kinds of substrates which regulate its release and persistency.

This system is effected, for example, with capillaries having one end open from which the active ingredient is volatized (U.S. patent 4,017,030).

Alternative methods are described in patents EP 496,102 and in patents EP 683,977, U.S. 5,503,839 where the active ingredient is contained in ampoules or tubes made of polymeric material from which it volatizes by permeation through the walls.

Other examples are disclosed in DE 29905603, teaching a mean to protect plants from insects which comprises the use of pheromones in small containers, bundles, films or bags which are made of fully decomposable plastics such as gelatine, lignine, cellulose. It discloses only containers for pheromones. A.K.Kulshreshtha et al. in "Eco-friendly plastics for a niche market", retrieved from STN-INTERNATIONAL & POP.PLAST.PACKAG., vol. 43, no 11, 1998, pages 53-62, simply reviews biodegradable plastics which are available in 1998, as starch filled thermoplastics, such as LDPE, LLDPE, HDPE, ethylene-acrylic acid copolymers, starch-g-PAN graft copolymers, polyester based polyurethanes. EP 0816430 discloses a biodegradable sustained release preparation which comprises a mixture of: from 99 to 10 parts by weight of an aliphatic polyester and from 1 to 90 parts by weights of a modifier for the regulation of sustained releasability of an active ingredient. EP 0402826 refers to a process for the preparation of a polar ethylene copolymer filled with from 5 to 90% by weight of a non fibrous carbohydrate, by extrusion of a mixture of the components and the use of the so prepared material as pheromone dispenser.

JP-A-04-230602 discloses compositions containing a macromolecular material carrying pheromone with a biodegradable or photodegradable degradation accelerator (or their mixtures) added at 1-40%.

US 4,842,860 discloses a process for producing a controlled release preparation which volatilises drugs or active ingredients such as pheromones. The process comprises the steps of mixing a resin with a carrier, impregnating the resulting mixture with an active ingredient and compressing the mixture to form a solid. The resin is selected from the group consisting of polyethylene, polypropylene etc.

Another method is described in Italian patent application IT 20054 A/85 in which the pheromone is contained in a device which has the function of both disorienting and attracting and eliminating adult insects.

The device consists of a substrate of fibers and/or fibrils containing a pheromone adsorbed or dispersed therein, partially coated with a layer either completely or moderately impermeable to the pheromone, consisting of aluminum, nylon, polyester or polyvinyl chloride film.

The systems described in the known art, however, have the disadvantage of not being biodegradable which causes an accumulation of polymeric materials in the environment treated.

The objective of the present invention is therefore to produce a biodegradable device which allows the slow and controlled release of the pheromone into the air and which has a disorienting action with respect to insects.

It has now been found that this and other objectives are obtained by means of an injection moulded device for fighting against insects, consisting of a biodegradable material based on starches and thermoplastic polymers containing a pheromone or mixture of pheromones, wherein the pheromone or mixtures of pheromones is specific for each of the following insects: Cydia molesta, Anarsia lineatella, Cydia funebrana, Cydia pomonella, Lobesia botrana, Spodoptera littoralis, Heliothis armigera and the content of pheromone or mixtures of pheromones ranges from 0.5 to 2% by weight.

In the specific case of the fight against insects, the pheromones which can be used derive from alcohols, acetates and aldehydes containing from 10 to 18 carbon atoms, mono-, bi- and tri-unsaturated and their mixtures, such as for example pheromones of Cydia molesta, Anarsia lineatella, Cydia funebrana, Cydia pomonella, Lobesia botrana, Spodoptera littoralis, Heliothis armigera.

The device of the invention can also be used for the controlled release of other volatile products useful in the fight against insects such as Trimedlure®, for example.

This product which is sold by Chem Progress S.r.l. has an attracting function with respect to fruit flies, Ceratitis capitata, and can be used for the production of both monitoring and mass capture traps.

Any biodegradable material based on starches and thermoplastic polymers can be used for the production of the device of the invention.

Materials based on maize starch capable of being rapidly biodegraded or composted, can be used, which can be extruded or moulded under not excessively drastic temperature conditions and with reduced moulding times, in order to protect the pheromones incorporated therein.

These materials are described in European patent EP-0539541 B1 and are commercially known under the trade-name of MATER-Bi® (Novamont).

The device can have any form suitable for application on site, such as envelope, rod, spiral or hooked with an elongated stem.

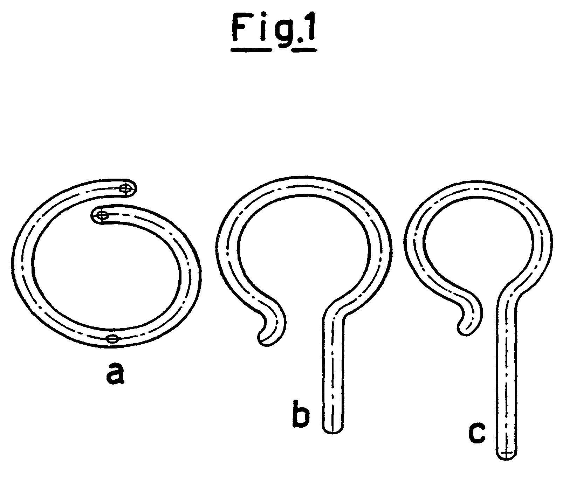

Spiral and hooked forms with a length of 7-13 cm are preferred owing to their easy application (Fig.1).

The release rate of the pheromone is influenced by the thickness of the material used for producing the specific forms.

Materials having a diameter ranging from 2-5 mm generally allow acceptable release rates, whereas optimum rates are obtained with materials having a diameter ranging from 3 to 4 mm.

The device of the present invention can be prepared by impregnating granules of the biodegradable material with the pheromone in a horizontal mixer.

The pheromone can be used as such or in a solution of suitable solvents.

Examples of solvents which can be used are: methanol, glycerin, maize oil, white mineral oil, saturated alcohols containing from 10 to 14 carbon atoms and their acetates.

The mixing is carried out at temperatures ranging from 20 to 40°C and for a time varying from 30 minutes to two hours, preferably from 45 to 60 minutes.

The impregnated granules are subsequently injection moulded into the various forms, at temperatures ranging from 100° to 200°C, preferably from 140° to 160°C.

Stabilizers and antioxidants can be optionally added to protect the active ingredients from atmospheric agents and dyes, for the differentiation of the pheromones of the various species of harmful insects.

The pheromone content for each diffuser ranges preferably from 0.7 to 1%.

In order to control the insect species harmful for agrarian crops, a number of diffusers are installed per hectare ranging from 1300 to 3000, preferably from 1500 to 2500.

The quantity of active ingredient thus used ranges from 6.5 to 60 grams per hectare, preferably from 10 to 25 g/ha.

### EXAMPLE 1

4.9955 grams of pheromone mixture for Cydia molesta, consisting of Z8-12:Ac, Z8-12:OH and E8-12:Ac (in a ratio of 92:1:7), are added to 500 grams of Mater-Bi Novamont grade ZFO3U/A (see EP 539,541 B1) and thoroughly mixed by rotation in a cylindrical glass jar horizontally positioned on a rotating jar-holder for 30 minutes, at room temperature.

The theoretical pheromone content is therefore 0.999 grams per 100 grams of granules.

Samples of granules thus impregnated are accurately weighed and analyzed to determine the actual quantity of pheromone contained therein, as described in Example 4.

The remaining granules are injection moulded at a temperature of 140°C into spiral and hooked forms with an elongated stem (see fig. 1 a-b).

The end-products obtained are subsequently analyzed to determine the actual quantity of pheromone contained therein, as described in Example 4 below.

### EXAMPLE 2

5.0549 grams of pheromone mixture for Cydia molesta are added to 500 grams of Mater-Bi Novamont grade ZFO3U/A and treated as in Example 1, but for 60 minutes. The theoretical pheromone content is therefore 1.011 grams per 100 grams of granules.
The same procedure is adopted as described in Example 1.

### EXAMPLE 3

5.1394 grams of pheromone mixture for Cydia molesta, diluted 1:3 with methanol, are added to 500 grams of Mater-Bi Novamont grade ZFO3U/A and thoroughly mixed by rotation in a 1 liter flask connected to a rotating evaporator. After 30 minutes of mixing, the solvent in excess is stripped under vacuum, at room temperature, for a period of 10 minutes.

The theoretical pheromone content is therefore 1.028 grams per 100 grams of granules.
The same procedure is adopted as described in Example 1.

### EXAMPLE 4

### Determination of the pheromone quantity contained in the granules and end-products.

The granules and end-products prepared in the previous examples are left to soak for a night in 20 ml of tetrahydrofuran containing 0.2 mg/ml of n-hexadecanol as internal standard. The samples are centrifuged at 3000 revs/min for 15 minutes and the supernatant is analyzed by gas-chromatography.
The results are indicated in the following table.

| Example | Content found (%) | | | Theoretical content (%) |
|---|---|---|---|---|
| | Granules | Spiral | Hook | Granules |
| 1 | 0.983 | 0.848 | 0.840 | 0.999 |
| 2 | 1.085 | 0.986 | 0.949 | 1.011 |
| 3 | 0.974 | 0.887 | 0.903 | 1.028 |
| 10 | n.d. | n.d. | 0.985 | 1.012 |
| 11 | n.d. | n.d. | 1.062 | 1.000 |
| 12 | n.d. | n.d. | 1.798 | 2.004 |
| 13 | n.d. | n.d. | 0.746 | 1.000 |
| 14 | n.d. | n.d. | 0.807 | 1.000 |

### EXAMPLE 5

Granules of Mater-Bi having different compositions are impregnated with pheromone for Cydia molesta according to Example 2, extruded into rods having a length of 10 cm, a diameter of 3 mm and a weight of 1 gram. Each diffuser thus obtained contains an average of 1% by weight of pheromone, except for sample F 0.5 which contains an average of 0.5% by weight of pheromone. The diffusers are exposed in mid-field, periodically removed at pre-selected times and analyzed according to Example 4.

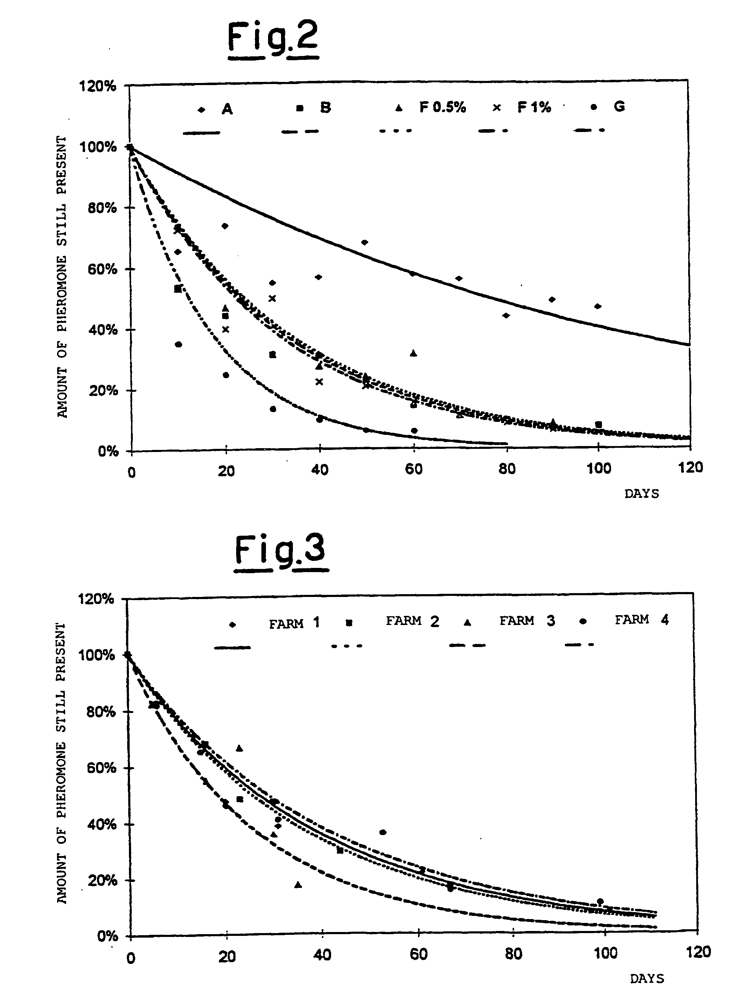

The compositions used are indicated in the following table, whereas the release kinetics are summarized in figure 2.

| Sample | Mater-Bi grade | Pheromone (w/w %) |
|---|---|---|
| A | ZF03U + AF05H (1:1) | 1 |
| B | ZF03U | 1 |
| F | ZF03U/A | 1 |
| F 0.5 | ZF03U/A | 0.5 |
| G | ZI01U | 1 |

### EXAMPLE 6

Granules of Mater-Bi grade ZF03U/A are treated in a horizontal mixer equipped with screw blades with a pheromone mixture for Cydia molesta, for 60 minutes at room temperature.

The granules are then injection moulded into hook form with an elongated stem (Fig. 1c) and the diffusers obtained have an average content of 1% by weight.

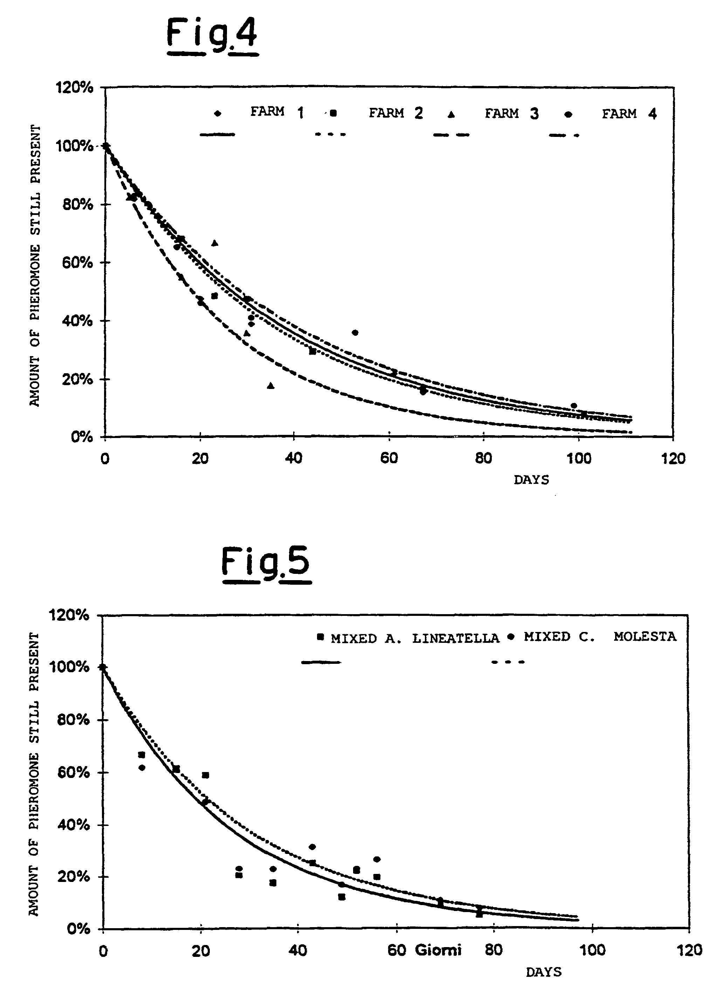

The diffusers are exposed in mid-field, periodically removed at pre-selected times and analyzed according to Example 4. Figure 3 indicates the release kinetics.

### EXAMPLE 7

The same procedure is adopted as described in Example 6, but using the pheromone for Anarsia lineatella, consisting of E5-decen-1-yl acetate and E5-decen-1-ol (in a ratio of 82:18).

The diffusers are exposed in mid-field, periodically removed at pre-selected times and analyzed according to Example 4. Figure 4 indicates the release kinetics.

### EXAMPLE 8

The same procedure is adopted as described in Example 6, but using a 1:1 mixture of both pheromones for Cydia molesta and Anarsia lineatella, with a mixing time equal to 120 minutes.

The diffusers obtained have an average content of 1% by weight of each pheromone.

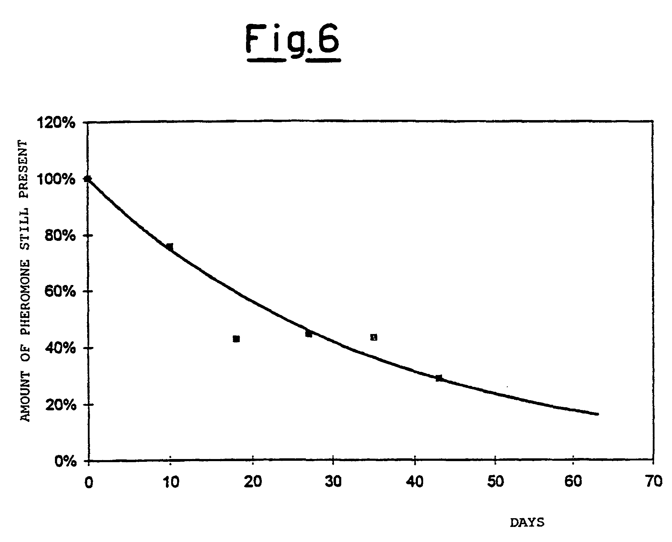

The diffusers are exposed in mid-field, periodically removed at pre-selected times and analyzed according to Example 4. Figure 5 indicates the release kinetics.

### EXAMPLE 9

The same procedure is adopted as described in Example 6, but using a pheromone mixture for Cydia funebrana, consisting of Z8-dodecen-1-yl acetate and dodecyl acetate (in a ratio of 1:1), with a mixing time equal to 90 minutes.

The diffusers are exposed in mid-field, periodically removed at pre-selected times and analyzed according to Example 4. Figure 6 indicates the release kinetics.

### EXAMPLE 10

10 grams of a 1:1 pheromone mixture for Cydia pomonella, E8,E10-12:OH, and dodecyl acetate are added to 500 grams of Mater-Bi Novamont grade ZF03U/A and treated as described in Example 1, but for 180 minutes.

The same procedure is adopted as described in Example 1.

### EXAMPLE 11

10 grams of a 1:1 pheromone mixture for Cydia pomonella, and tetradecyl acetate are added to 500 grams of Mater-Bi Novamont grade ZF03U/A and treated as described in Example 1, but for 180 minutes.

The same procedure is adopted as described in Example 1.

### EXAMPLE 12

10 grams of a 1:1 pheromone mixture for Cydia pomonella, and a pheromone mixture for Cydia molesta are added to 500 grams of Mater-Bi Novamont grade ZF03U/A and treated as described in Example 1, but for 120 minutes.

The same procedure is adopted as described in Example 1.

### EXAMPLE 13

2.5 grams of a pheromone mixture for Spodoptera littoralis, consisting of Z9,E11-14:Ac and Z9,E12-14:Ac in a ratio of 1:0.05, are added to 250 grams of Mater-Bi Novamont grade ZF03U/A and treated as described in Example 1, but for 60 minutes.

The same procedure is adopted as described in Example 1.

### EXAMPLE 14

2.5 grams of pheromone for Lobesia botrana, E7,Z9-12:Ac are added to 250 grams of Mater-Bi Novamont grade ZF03U/A and treated as described in Example 1, but for 60 minutes.

The same procedure is adopted as described in Example 1.

### EXAMPLE 15

Control of the population of Cydia molesta and Anarsia lineatella on peach trees.

A peach grove (cv. Spring Red Gold, Stark Red Gold, Maria Aurelia, Venus) with a surface of 1.6 ha consisting of 1949 plants (plant format 4.5 m x 3.5 m) was monitored with pheromone traps for Cydia molesta and Anarsia lineatella model Traptest Isagro.

Two traps are installed per species inside the lot of land being tested (Peach Grove A) to control the actual annulment of the captures and also in a neighbouring peach grove having the same characteristics, treated with specific insecticides (Peach Grove B) to evaluate the population density of the phytophagous species under examination.

The captures of the two phytophagous species were observed, at regular intervals of 7 days, from the installation of the traps to the peach harvest.

The insecticide treatment effected in Peach Grove B is indicated in the following table.

| Date | Product |
|---|---|
| May 30 | Chlorpyrifos-methyl |
| June 14 | Azinphos-methyl |
| July 3 | Azinphos-methyl |
| July 25 | Etofenprox |

The test results (average captures per trap) are indicated in the following table.

| Date | Cydia lot A | Cydia lot B | Anarsia lot A | Anarsia lot B |
|---|---|---|---|---|
| 07/04/98 | 8.3 | 9 | | |
| 10/04/98 | 4.3 | 5.4 | | |
| 15/04/98 | 0 | 6 | | |
| 20/04/98 | 0 | 8.1 | | |
| 24/04/98 | 0 | 13.6 | | |
| 27/04/98 | 0 | 12 | | |
| 06/05/98 | 0 | 6 | 0 | 0 |
| 11/05/98 | 0 | 9.6 | 1.6 | 2 |
| 13/05/98 | 0 | 9 | 0 | 6.5 |
| 18/05/98 | 0 | 6.6 | 0 | 18 |
| 27/05/98 | 0 | 3.6 | 0 | 30.5 |
| 30/05/98 | 0 | 4.6 | 0 | 19 |
| 08/06/98 | 0 | 37.3 | 0 | 1.3 |
| 12/06/98 | 1 | 46 | 0 | 0.5 |
| 15/06/98 | 0 | 36 | 0 | 1 |
| 22/06/98 | 0 | 7 | 0 | 1.2 |
| 25/06/98 | 0 | 0 | 0 | 5 |
| 29/06/98 | 0 | 7 | 0 | 8.5 |
| 02/07/98 | 0 | 5 | 2 | 19.3 |
| 10/07/98 | 0 | 47 | 0 | 35 |
| 22/07/98 | 0 | 20.3 | 0 | 47.5 |
| 27/07/98 | 0 | 27 | 0 | 33.5 |
| 06/08/98 | 0 | 19 | 0 | 18.5 |
| 11/08/98 | 0 | 9.5 | 0 | 12 |

With the first captures of Cydia molesta males (April 10), 2 diffusers were installed per plant, impregnated with the pheromone for Cydia molesta, equal to 2350 diffusers per hectare equivalent to a dose of 23.5 g/a.i./ha.

Two months later (June 12), after observing the first captures of Cydia molesta in the spy trap installed in the lot of land being tested (Peach Grove A), the diffusers were re-installed using the same procedure adopted in the first intervention.

With the first captures of Anarsia lineatella males (May 11), 2 diffusers were installed per plant impregnated with pheromone for Anarsia lineatella equal to 2350 diffusers per hectare equivalent to a dose of 23.5 g/a.i./ha.

Two months later (July 2), after observing the first captures of Anarsia lineatella in the spy trap installed in the lot of land being tested (Peach Grove A), the diffusers were re-installed using the same procedure adopted in the first intervention.

When the peaches are harvested, the percentage of damage on the part of Cydia molesta and Anarsia lineatella is observed in lot A compared to that of lot B. The results are indicated in the following table.

| Harvest date | Cultivar | % damage lot A | % damage lot B |
|---|---|---|---|
| July 6 | Spring Red | 0.5 | 0.5 |
| August 1 | Stark Red Gold | 2.6 | 3.1 |
| August 1 | Maria Aurelia | 2.6 | 2.9 |
| August 10 | Venus | 2.8 | 3.2 |

### EXAMPLE 16

### Control of the population of Cydia molesta and Anarsia lineatella on peach trees.

A peach grove (cv.Caldesi 84, Farlaine) with a surface of 1 ha consisting of 780 plants (plant format 4.5 m x 2.5 m) was monitored with pheromone traps for Cydia molesta and Anarsia lineatella model Traptest Isagro.

Two traps are installed per species inside the lot of land being tested (Peach Grove A) to control the actual annulment of the captures and also in a neighbouring peach grove having the same characteristics, treated with specific insecticides (Peach Grove B) to evaluate the population density of the phytophagous species under examination.

The captures of the two phytophagous species were observed, at regular intervals of 7 days, from the installation of the traps to the peach harvest.

The insecticide treatment effected in Peach Grove B is indicated in the following table.

| Date | Product |
|---|---|
| May 30 | Gusathion PB |
| June 12 | Delphin (B.t.) |
| June 19 | Ecopom (confusion C. pomonella) |
| July 25 | Delphin (B.t.) |

The test results (average captures per trap) are indicated in the following table.

| Date | Cydia lot A | Cydia lot B | Anarsia lot A | Anarsia lot B |
|---|---|---|---|---|
| 06/04/99 | 7.5 | 6.6 | | |
| 15/04/99 | 2 | 1.6 | | |
| 23/04/99 | 0.3 | 0 | | |
| 29/04/99 | 5.3 | 6 | | |
| 06/05/99 | 2 | 1.6 | 0 | 1 |
| 13/05/99 | 1.3 | 1.6 | 18 | 29 |
| 23/05/99 | 0 | 2.3 | 0 | 73.6 |
| 27/05/99 | 0 | 0.6 | 0 | 38.3 |
| 01/06/99 | 0 | 6.3 | 0 | 9 |
| 07/06/99 | 0 | 12.6 | 0 | 27 |
| 14/06/99 | 0 | 5 | 0 | 7.6 |
| 21/06/99 | 0 | 7.5 | 0 | 0 |
| 29/06/99 | 0 | 1 | 0 | 23 |
| 07/07/99 | 0 | 16 | 0 | 9 |
| 15/07/99 | 0 | 30 | 2 | 79 |
| 20/07/99 | 0 | 16.3 | 0 | 80 |
| 27/07/99 | 0 | 13.7 | 0 | 47 |
| 02/08/99 | 0 | 10.3 | 0 | 28.3 |
| 09/08/99 | 0 | 6 | 0.3 | 6 |
| 16/08/99 | 0 | 10.6 | 0.3 | 3 |
| 23/08/99 | 0 | 78.3 | 1.3 | 21 |
| 28/08/99 | 0.6 | 15.3 | 3 | 27.3 |
| 04/09/99 | 1.3 | 18.5 | 4.3 | 37 |

3 diffusers per plant are installed in mid-May (May 13), contemporaneously containing pheromones of Cydia and Anarsia (Example 8) equal to 2340 diffusers per hectare equivalent to a dose of 23.4 g/a.i./ha for Cydia and 23.4 g/a.i./ha for Anarsia.

After the installation of the diffusers, an insecticide treatment is effected (Triflumuron).

After about two months, when the first captures of Anarsia (July 15) are observed in the spy trap installed in the lot being tested (Peach Grove A), diffusers impregnated with both pheromones (Cydia and Anarsia) were re-installed using the same procedure adopted in the first intervention.

When the peaches are harvested , the percentage of damage on the part of Cydia molesta and Anarsia lineatella is observed in lot A compared to that of lot B. The results are indicated in the following table.

| Harvest date | Cultivar | % damage lot A | % damage lot B |
|---|---|---|---|
| September 6 | Caldesi 84 | 1.8 | 8.0 |
| September 13 | Farlaine | 2.4 | 10.0 |

### EXAMPLE 17

### Control of the population of Cydia molesta on apple trees.

An apple orchard (cv. Golden D, Stark D.) with a surface of 1 ha consisting of 1250 plants (plant format 4 m x 2 m) was monitored with pheromone traps for Cydia molesta (model Traptest Isagro).

Two traps are installed inside the lot of land being tested (Apple Orchard A) to control the actual annulment of the captures and also in a neighbouring apple orchard having the same characteristics, treated with specific insecticides (Apple Orchard B) to evaluate the population density of the phytophagous species under examination.

The captures of the two phytophagous species were observed, at regular intervals of 7 days, from the installation of the traps to the apple harvest.

The insecticide treatment effected in Apple Orchard B is indicated in the following table.

| Date | Product |
|---|---|
| May 30 | Gusathion PB |
| June 12 | Delphin (B.t.) |
| June 19 | Ecopom (confusion C. pomonella) |
| July 25 | Delphin (B.t.) |

The test results (average captures per trap) are indicated in the following table.

| Date | C molesta lot A | C molesta lot B |
|---|---|---|
| 15/07/98 | 9 | 0 |
| 17/07/98 | 0 | 12 |
| 23/07/98 | 0 | 36 |
| 03/08/98 | 0 | 55 |
| 11/08/98 | 0 | 38 |
| 18/08/98 | 0 | 40 |
| 25/08/98 | 0 | 15 |
| 01/09/98 | 0 | 20 |

1500 diffusers per hectare are installed in mid-July (July 17), impregnated with the Cydia molesta pheromone, equivalent to a dose of 15 g/a.i./ha.

When the apples are harvested, the percentage of damage on the part of Cydia molesta is observed in lot A compared to that of lot B. The results are indicated in the following table.

| Harvest date | Cultivar | % damage lot A | % damage lot B |
|---|---|---|---|
| September 13 | Stark D | < 1% | < 1% |
| September 18 | Golden D | < 1% | < 1% |

### EXAMPLE 18

### Control of the population of Anarsia lineatella on apricot trees.

An apricot grove (cv. Caldesi 1, Sungiant, Sabbatani) with a surface of 1.5 ha consisting of 720 plants (plant format 5.5 m x 2.5 m) was monitored with pheromone traps for Anarsia lineatella model Traptest Isagro.

Two traps are installed inside the lot of land being tested (Lot A) to control the actual annulment of the captures and also in a neighbouring apricot grove having the same characteristics, treated with specific insecticides (Lot B) to evaluate the population density of the phytophagous species under examination.

The captures of the phytophagous species were observed, at regular intervals of 7 days, from the installation of the traps to the apricot harvest.

The insecticide treatment effected in Lot B is indicated in the following table.

| Date | Product |
|---|---|
| May 23 | Chlorpyrifos-methyl |
| June 13 | Etofenprox |

The test results (average captures per trap) are indicated in the following table.

| Date | Anarsia lot A | Anarsia lot B |
|---|---|---|
| 02/05/98 | 0 | 0 |
| 09/05/98 | 0 | 0 |
| 16/05/98 | 0 | 2.5 |
| 23/05/98 | 0 | 10.5 |
| 30/05/98 | 0 | 7.5 |
| 06/06/98 | 0 | 29 |
| 13/06/98 | 0 | 8 |
| 20/06/98 | 0 | 3 |
| 27/06/98 | 0 | 10.5 |
| 04/07/98 | 0 | n.m. |

1750 diffusers per hectare are installed with the first captures of Anarsia lineatella (May 16), impregnated with the Anarsia lineatella pheromone, equivalent to a dose of 17.5 g/a.i./ha.

When the apricots are harvested, the percentage of damage on the part of Anarsia lineatella is observed in lot A compared to that of lot B. The results are indicated in the following table.

| Harvest date | Cultivar | % damage lot A | % damage lot B |
|---|---|---|---|
| June 18 | Caldesi 1 | < 1% | < 1% |
| June 18 | Sun Giant | < 1% | < 1% |
| June 26 | Sabbatani | < 1% | < 1% |

### EXAMPLE 19

### Control of the population of Cydia funebrana on plum trees.

An orchard of plum trees (cv. Angelino) with a surface of 8.5 ha consisting of 6180 plants (plant format 5.5 m x 2.5 m) was monitored with pheromone traps for Cydia funebrana, model Traptest Isagro.

Two traps are installed inside the lot of land being tested (Lot A) to control the actual annulment of the captures and also in a neighbouring lot having the same characteristics, biologically cultivated (Lot B) to evaluate the population density of the phytophagous species under examination.

The captures of the phytophagous species were observed, at regular intervals of 7 days, from the installation of the traps to the plum harvest.

The insecticide treatment effected in Lots A and B is indicated in the following table.

| Date | Lot A | Lot B |
|---|---|---|
| April 1 | Bacillus thuringiesis (B.t) | Bacillus thuringiesis (B.t) |
| June 30 | Oil + B.t. + Rotenone | Oil + B.t. + Rotenone |
| July 12 | Disorient. C. funebrana | Confusion C. molesta |
| July 13 | | Oil + B.t. + Rotenone |
| August 8 | | Oil + B.t. + Rotenone |
| August 20 | | Oil + B.t. + Rotenone |

The test results (average captures per trap) are indicated in the following table.

| Date | C. funebrana lot A | C. funebrana lot B |
|---|---|---|
| 14/07/99 | 0 | 12 |
| 21/07/99 | 0 | 24 |
| 28/07/99 | 0 | 18 |
| 04/08/99 | 1.3 | 15 |
| 11/08/99 | 0 | 19 |
| 18/08/99 | 0 | 23 |
| 25/08/99 | 0 | 20 |
| 01/09/99 | 0 | 15 |
| 09/09/99 | 0 | 17 |

On July 12, 2000 diffusers per hectare are installed, impregnated with the Cydia funebrana pheromone, equivalent to a dose of 20 g/a.i./ha.

When the plums are harvested, the percentage of damage on the part of Cydia funebrana is observed in lot A compared to that of lot B. The results are indicated in the following table.

| Harvest date | Cultivar | %damage lot A | %damage lot B |
|---|---|---|---|
| September 10 | Angelino | 1% | 30% |

## Claims

1. An injection moulded device for fighting against insect consisting of biodegradable material based on starches and thermoplastic polymers, containing a pheromone or a mixture of pheromones wherein the pheromone or mixtures of pheromones is specific for each of the following insects: Cydia molesta, Anarsia lineatella, Cydia funebrana, Cydia pomonella, Lobesia botrana, Spodoptera littoralis, Heliothis armigera and the content of pheromone or mixtures of pheromones ranges from 0.5 to 2% by weight.

2. The device according to claim 1, wherein the content of pheromone or mixture ranges from 0.7 to 1% by weight.

3. The device according to claim 1, in spiral or hook form having a length ranging from 7-13 cm and a diameter of 2-5 mm.

4. The device according to claim 3, having a diameter ranging from 3 to 4 mm.

5. A process for the preparation of the device according to claim 1, wherein granules of biodegradable material are impregnated with a pheromone or a mixture of pheromones, as such or dissolved in a solvent, by mixing in a horizontal mixer, for a time varying from 30 minutes to two hours, at temperatures ranging from 20 to 40°C and, are subsequently injection moulded into various forms, at temperatures ranging from 100° to 200°C.

6. The process according to claim 5, wherein the mixing time ranges from 45 to 60 minutes.

7. The process according to claim 5, wherein the injection moulding takes place at temperatures ranging from 140° to 160°C.

8. A method for controlling insects harmful to agrarian crops which consists in installing the devices according to claim 1 on site, in a number ranging from 1300 to 3000 per hectare, so that the quantity of active ingredient used ranges from 6.5 to 60 grams per hectare.

9. The method according to claim 8, wherein the number of devices installed ranges from 1500 to 2500 per hectare and the quantity of active ingredient ranges from 10 to 25 g per hectare.

## Patentansprüche

1. Spritzgegossene Vorrichtung für die Insektenbekämpfung, bestehend aus bioabbaubarem Material auf Basis von Stärken und thermoplastischen Polymeren, enthaltend ein Pheromon oder eine Mischung von Pheromonen, wobei das Pheromon oder die Mischung von Pheromonen spezifisch für jedes der folgenden Insekten ist: Cydia molesta, Anarsia lineatella, Cydia funebrana, Cydia pomonella, Lobesia botrana, Spodoptera littoralis, Heliothis armigera, und der Gehalt von Pheromon oder Mischungen von Pheromonen von 0,5 bis 2 Gew.-% reicht.

2. Vorrichtung nach Anspruch 1, bei welcher der Gehalt von Pheromon oder der Mischung von 0,7 bis 1 Gew.-% reicht.

3. Vorrichtung nach Anspruch 1 in Spiral- oder Hakenform, die eine Länge im Bereich von 7 - 13 cm und einen Durchmesser von 2 - 5 cm hat.

4. Vorrichtung nach Anspruch 3, die einen Durchmesser hat, der von 3 bis 4 mm reicht.

5. Verfahren zur Herstellung der Vorrichtung von Anspruch 1, bei welchem Granulen von bioabbaubarem Material mit einem Pheromon oder einer Mischung von Pheromonen, als solche oder aufgelöst in einem Lösungsmittel, in einem Horizontalmischer für eine von 30 Minuten bis 2 Stunden variierende Zeitspanne bei Temperaturen von 20 bis 40°C imprägniert werden und nachfolgend in verschiedene Formen bei Temperaturen, die von 100° bis 200°C reichen, spritzgegossen werden.

6. Verfahren nach Anspruch 5, bei welchem die Mischzeit von 45 bis 60 Minuten reicht.

7. Verfahren nach Anspruch 5, bei welchem das Spritzgießen bei Temperaturen, die von 140° bis 160°C reichen, stattfindet.

8. Verfahren zur Steuerung von für Agrarernten schädlichen Insekten, welches in der Installation der Vorrichtungen entsprechend Anspruch 1 am Ort in einer Anzahl von 1300 bis 3000 pro Hektar besteht, so daß die verwendete Menge von aktivem Inhaltsstoff von 6,5 bis 60 Gramm pro Hektar reicht.

9. Verfahren nach Anspruch 8, bei welchem die Anzahl der installierten Vorrichtungen von 1500 bis 2500 pro Hektar reicht und die Menge von aktivem Inhaltsstoff von 10 bis 25 g pro Hektar reicht.

## Revendications

1. Dispositif moulé par injection pour lutter contre des insectes consistant en un matériau biodégradable à base d'amidons et de polymères thermoplastiques, contenant une phéromone ou un mélange de phéromones dans lequel la phéromone ou les mélanges de phéromones est spécifique à chacun des insectes suivants : Cydia molesta, Anarsia lineatella, Cydia funebrana, Cydia pomonella, Lobesia botrana, Spodoptera littoralis, Heliothis armigera et la concentration de phéromone ou mélanges de phéromones varie de 0,5 à 2% en poids.

2. Dispositif selon la revendication 1, dans lequel la concentration de phéromone ou mélange varie de 0,7 à 1% en poids.

3. Dispositif selon la revendication 1, en forme de spirale ou de crochet dont la longueur varie de 7 à 13 cm et le diamètre de 2 à 5 mm.

4. Dispositif selon la revendication 3, dont le diamètre varie de 3 à 4 mm.

5. Procédé de fabrication du dispositif selon la revendication 1, dans lequel des granules de matériau biodégradable sont imprégnées d'une phéromone ou d'un mélange de phéromones, telle quelle ou dissoute dans un solvant, en les mélangeant dans un mixeur horizontal, pour une durée variant entre 30 minutes et deux heures, à des températures variant de 20 à 40 °C, et sont ensuite moulées par injection sous différentes formes, à des températures allant de 100 à 200 °C.

6. Dispositif selon la revendication 5, dans lequel la durée de mélange varie de 45 à 60 minutes.

7. Dispositif selon la revendication 5, dans lequel le moulage par injection est réalisé à des températures allant de 140 à 160 °C.

8. Procédé pour contrôler les insectes nuisibles pour les récoltes agricoles consistant à placer les dispositifs selon la revendication 1 sur le site, à raison de 1300 à 3000 par hectare, pour que la quantité de substance active utilisée varie de 6,5 à 60 grammes par hectare.

9. Procédé selon la revendication 8, dans lequel le nombre de dispositifs installés varie de 1500 à 2500 par hectare et la quantité de substance active varie de 10 à 25 g par hectare.
